## Europäisches Patentamt

(19) **European Patent Office**

**Office européen des brevets**

(11) Publication number: **0 006 099**
**B1**

(12) # EUROPEAN PATENT SPECIFICATION

(45) Date of publication of patent specification: **12.08.81**

(21) Application number: **78300007.8**

(22) Date of filing: **01.06.78**

(51) Int. Cl.³: **B 01 D 53/26, C 21 B 9/16, F 24 F 3/14**

(54) Apparatus for dehydration of air.

| | |
|---|---|
| (43) Date of publication of application: **09.01.80 Bulletin 80/1** | (73) Proprietor: **TAKASAGO THERMAL ENGINEERING CO. LTD.** **4-2, Kanda Surugadai Chiyoda-Ku Tokyo (JP)** |
| (45) Publication of the grant of the European patent: **12.08.81 Bulletin 81/32** | (73) Proprietor: **Nippon Steel Corporation** **6-3 Otemachi 2-chome Chiyoda-ku Tokyo (JP)** |
| (84) Designated Contracting States: **DE FR GB NL** | (72) Inventor: **Yoshida, Toru** **715-203, Uchikoshi Hachioji-shi Tokyo (JP)** Inventor: **Hosoi, Kameo** **5-8-9, Chuo, Waradi-shi Saitama-Ken (JP)** Inventor: **Tanaka, Takehisa** **2-29-9, Konan, Konan-Ku Yokohama-shi Kanagawa-Ken (JP)** Inventor: **Hirai, Seiji** **3-480, Mozuhon-machi Sakai-shi Osaka (JP)** Inventor: **Masakazu, Nakauji** **3-480, Mozuhon-machi Sakai-shi Osaka (JP)** |
| (56) References cited: **GB - A - 976 801** **US - A - 2 420 993** **US - A - 3 350 892** | |
| | (74) Representative: **Armitage, Ian Michael et al, MEWBURN ELLIS & CO. 70/72 Chancery Lane London WC2A 1AD (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Apparatus for dehydration of air

The present invention relates to an apparatus for dehydration of air. More particularly it concerns wet process continuous dehydration of atmospheric air so that it is suitable for supply to a blast furnace. It relates to such an apparatus in which a large volume of air required for use in the operation of a blast furnace may be processed by bringing it into contact with regenerative hygroscopic liquid so as to reduce the moisture content of the air to a level not higher than a predetermined level throughout the year. More particularly, it relates to such an apparatus in which the regeneration of the hygroscopic liquid can be carried out precisely and effectively in accordance with the change of the seasons, and which can provide dehydrated air of a reduced moisture content not higher than a predetermined level, irrespective of the seasons of the year, at the cost of low energy consumption.

As well known in the art, fuel consumption required in operation of a blast furnace decreases if the furnace is allowed to operate with air of a reduced moisture content. It is also known that for stable operation of the furnace it is essential to minimize variations in the moisture content of air supplied to the furnace. Various processes and apparatus have heretofore been proposed for dehydration of air to be supplied to a blast furnace. They may be classified into two types of technology, one type in which compressed air is dehydrated at the output side of a blower, as disclosed in Japanese laid-open Patent Application No. 69406/1976 (Japanese examined Patent publication No. 44724/1977), and the other type in which atmospheric air is dehydrated at the input side of a blower, as disclosed in Japanese laid-open Patent Application No. 61056/1974. Generally, the dehydration process is carried out in both types using a regenerative hygroscopic agent which may be in the form of solid or liquid.

In dehydration of air at the output side of the blower, a stream of compressed air must be processed which normally has a pressure of 3 to 5 Kg/cm² gauge and a temperature of 150 to 250°C, and therefore, strong, durable and complicated instruments are required. Furthermore, it is technically difficult to use liquid hygroscopic agents which are less expensive in both initial installation and maintenance costs.

Dehydration of atmospheric air at the input side of the blower is technically less difficult than dehydration of compressed air at the output side of the blower, and may be carried out using inexpensive liquid hygroscopic agents. In this case, however, the change in the temperature and humidity of intake atmospheric air poses a serious problem. This is especially true in those areas where the atmospheric conditions vary to a great extent with the change in the seasons of the year. The dehydration process must be suitably varied in response to the change in the atmospheric conditions, or otherwise it is impossible to produce dehydrated air of a reduced moisture content not higher than a predetermined level, irrespective of the seasons of the year, as required for stable operation of the blast furnace. This problem which is due to the change in the atmospheric conditions is not encountered in the dehydration process for general air conditioning. In fact it is not necessary for the purpose of air conditioning to dehydrate air in winter. In contrast, the blast furnace is not allowed to stop operating and must be maintained under constant operating conditions throughout the year, and therefore requires a large volume of dehydrated air of a reduced moisture content not higher than a predetermined level in all seasons.

Accordingly, the requirements in the operation of the blast furnace, as discussed above, are not fully met by mere application of dehydration processes and apparatus which are known for air conditioning. In fact various dehydration processes and apparatus have heretofore been proposed for air conditioning, in which atmospheric air is dehydrated by bringing it into contact with regenerative hygroscopic liquid and the used hygroscopic liquid is regenerated. For example U.S. Patent No. 2,881,853 to G.A. Kelley discloses an apparatus and method for conditioning air wherein atmospheric air is successively processed in first and second cooling and dehydrating zones, and the functions of the respective zones are controlled in accordance with the change in the specific gravity of the used hygroscopic liquid. U.S. Patent No. 3,064,952 to R.W. Brown teaches a system for conditioning air wherein air, which has been passed through dehydration means, is passed through a heat exchanger so as to adjust the relative humidity of the air. U.S. Patent No. 3,712,026 to Griffiths et al. discloses an enthalpy exchange system utilizing a hygroscopic solution wherein latent and sensible heat are transferred between said solution and intake air in at least one intake tower, and latent and sensible heat are exchanged between said solution and exhaust air in at least one exhaust tower. U.S. Patent No. 3,750,369 to D.H. Friedland teaches a system for controlling the moisture content of air using a hygroscopic liquid in which the liquid level and temperature of the hygroscopic liquid are maintained constant in the regeneration zone and the regenerated liquid is returned to a reservoir for the circulating liquid in such a controlled manner that the density of the liquid in the reservoir may be maintained constant. However, the first-mentioned two Patents do not contemplate winter operation and, thus, give no solution to the problem as to how the hygroscopic liquid may be regenerated in winter with minimum energy consumption. The third-mentioned Patent contemplates winter operation. However, the moisture content of the treated air increases in winter. Finally, the system according to the last-mentioned Patent is totally unsuitable for regeneration of a large volume of hygroscopic liquid, which is inevitable in dehydration of a large volume (2,000 to 12,000 Nm³/min, where N represents normal temperature and pressure) of air. The prior art processes and systems disclosed in these Patents may be suitably applied in universal air conditioning for buildings, but none of them gives a satisfactory solution to the problem involved in operation of a blast furnace, which requires a large volume of dehydrated air of a reduced moisture content not higher than a predetermined level throughout the year.

U.S. Patent No. 2,420,993 discloses apparatus for continuous dehydration of atmospheric air for supply via a blower to a blast furnace, comprising a dehydration assembly provided with at least one dehydration means for contacting an intake stream of atmospheric air with regenerative hygroscopic liquid so as to reduce the moisture content of the air, an outlet duct for the dehydrated air coming from the dehydration assembly, a regeneration assembly for used hygroscopic liquid, and provided with at least one regeneration means for contacting at least a part of the hygroscopic liquid which has been used in the dehydration assembly with another intake stream of atmospheric air heated by a fluid heating medium so as to regenerate said part of the hygroscopic liquid, piping means for circulating through the or each said dehydration means the so regenerated hygroscopic liquid together with any remainder of the hygroscopic liquid which has been used in the dehydration assembly, means for continuously detecting the density (and hence concentration) of the hygroscopic liquid flowing through said piping means, and means for controlling the flow rate of the fluid heating medium introduced into said regeneration means in accordance with a signal from said means for detecting the density (concentration) of the hygroscopic liquid.

It is desirable to provide apparatus of that kind in which it is possible by bringing atmospheric air into contact with regenerative hygroscopic liquid at the input side of a blower to prepare a large volume of dehydrated air required in operation of a blast furnace, the volume of the required air being, for example, 2,000 to 12,000 Nm³/min, the absolute humidity of the required air being, for example, a certain value not higher than 9.0 g/Nm³ with an allowable variation of ± 0.5 g/Nm³, irrespective of the seasons of the year. Such apparatus should be of a large size having such an improved controllability that the regeneration of the partially spent hygroscopic liquid can be carried out precisely and effectively in accordance with the change in the regeneration load due to the change in atmospheric conditions, at the cost of low energy consumption, whereby desirably stable and economical operation of the blast furnace may be ensured even in the districts where the climate changes considerably with the seasons of the year.

The present invention seeks to attain the abovementioned object in such apparatus wherein (a) a cylinder is provided through which at least a part of the hygroscopic liquid flowing through said piping means is caused to flow so as to provide a liquid head of a predetermined height; (b) means for continuously detecting the liquid pressure, and hence concentration, of the hygroscopic liquid flowing through said piping means comprising means for detecting the liquid pressure provided by said predetermined height of liquid in said cylinder said liquid pressure varying with the density and hence concentration of said liquid in the cylinder; (c) said regeneration assembly, being of such a size that it can handle the maximum regeneration load expected through the year, is divided into a plurality of regeneration units, each regeneration unit being provided with its own regeneration means, and means for controlling the flow rate of the hygroscopic liquid introduced into said regeneration means directly or indirectly in accordance with a signal from said means for detecting the concentration of the hygroscopic liquid, whereby each regeneration unit is controllably operable independently of other units, and; (d) each regeneration unit is further provided with at least one heat exchanger for transferring sensible heat of at least one fluid, of the regenerated hygroscopic liquid, fluid heating medium and air, leaving the regeneration means of said unit to at least one fluid, of the hygroscopic liquid to be regenerated and atmospheric intake air, introduced into said unit.

The preferred hygroscopic liquid used in the operation of the apparatus of the invention is an aqueous solution of a hygroscopic substance, such as lithium chloride, lithium bromide or triethylene glycol. The proportions of the hygroscopic substance and water in the solution, that is the concentration of the hygroscopic substance in the hygroscopic liquid is set at a certain value within the range between 35 and 50% by weight, depending upon the atmospheric conditions, but varies during the passage of the liquid through the apparatus of the invention.

A most complete appreciation of the invention and many of the attendant advantages thereof will readily be obtained as the same becomes better understood by reference to the following detailed description when considered in connection with the accompanying drawings, in which:

Fig. 1 schematically illustrates the incorporation of one embodiment of the invention in a blast furnace installation;

Fig. 2 illustrates a vertical cross-section of the regeneration assembly shown in Fig. 1, which is divided into four units, as well as the passages for various fluids;

Fig. 3 is a flow diagram illustrating means for detecting the concentration of the hygroscopic liquid and a control system using this means;

Fig. 4 is a partially cut away view for illustrating preferred means for detecting the concentration of the hygroscopic liquid; and

Fig. 5 is a flow diagram illustrating a preferred system for controlling the operation of the apparatus in accordance with the invention.

In the various figures the same reference numerals are used for equivalent parts.

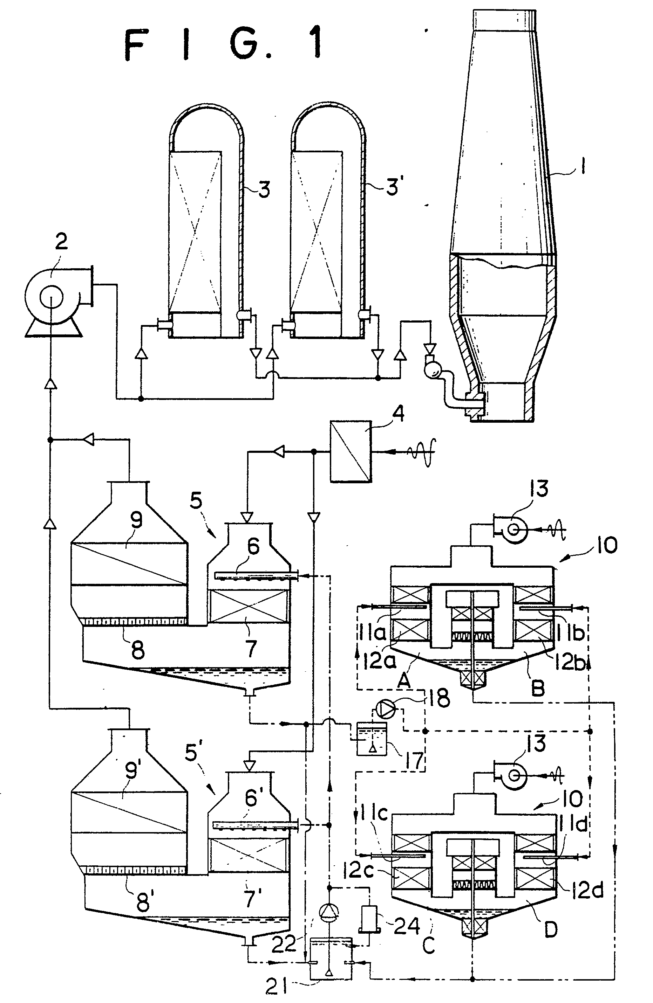

Referring to Fig. 1, the illustrated installation for supplying air to a blast furnace 1 comprises a blower or compressor 2 specially designed for use in the operation of a blast furnace and a pair of air heating furnaces or hot stoves 3, 3'. Air is compressed by the blower 2, heated by passing through one of the hot stoves 3 or 3' and then introduced into the blast furnace 1. The blower 2 is of such a size that it can provide 2,000 to 12,000 Nm³/min of air, depending on the size of the blast furnace 1, the air having a pressure of 3 to 5 Kg/cm² gauge at the output side of the blower. Each hot stove 3 or 3' contains a stack of regenerative material, such as laid refractory bricks, and is operated by alternately heating the regenerative material with a hot gas (combustion gas) from a separate source and bringing the compressed air from the blower 2 in contact with the heated regenerative material. It will be appreciated that at least a pair of such hot stoves are required for continuous supply of hot compressed air to the blast furnace.

The apparatus in accordance with the invention for dehydrating atmospheric air is installed at the input side of the blower 2. More specifically a dehydration assembly is incorporated into an air passage between a bag filter 4, through which atmospheric air is taken in, and the blower 2. While the dehydration assembly may comprise a single dehydrating tower, it preferably comprises a pair of dehydrating towers 5 and 5' arranged in parallel, as shown in Fig. 1. This is because when it becomes necessary to stop the operation of one of the towers for repair or other purposes, the other tower ensures continuous operation of the whole installation. The dehydrating tower 5 contains dehydration means comprising means 6 for spraying hygroscopic liquid and a heat exchanger 7 located below the spray 6. Atmospheric air, which has been drawn by the blower 2 through the bag filter 4, is brought into contact with the hygroscopic liquid being sprayed by the spray 6, whereupon a quantity of moisture in the air is condensed and absorbed by the hygroscopic liquid, which is cooled by the heat exchanger 7, through which cold water or brine (sea water) is circulated. The heat exchanger 7 removes the heat of condensation of the moisture and some of the residual sensible heat of the hygroscopic liquid which has been created but not yet completely removed in the regeneration treatment which will be described hereinafter. The air, which has been dehydrated by passing through the dehydration means, is then caused to pass through a mist separator 8 and filter 9 to the input side of the blower 2. The structure and function of the dehydrating tower 5' are the same as those of the tower 5 described above except for the fact that only a part of the partially spent hygroscopic liquid leaving the tower 5 is caused to pass to the regeneration treatment while the remainder of the liquid from the tower 5 and all of the liquid from the tower 5' are passed to a tank for circulation. Parts of the tower 5', which respectively correspond to those of the tower 5, are designated in Fig. 1 by the same numeral with a dash.

So long as no emergency occurs the blower 2 is allowed to operate so as to keep a certain constant state of operation throughout the whole year. Accordingly, the air output of the blower can remain unchanged throughout the year. However, the temperature and moisture content of air drawn through the bag filter 4 fluctuate considerably with the seasons of the year. In order to control the absolute humidity of air introduced into the input side of the blower 2 so that it falls within the range acceptable for a predetermined moisture level, it is necessary to supply hygroscopic liquid of a predetermined concentration to the sprays 6, 6', and to control the flow rate of coolant supplied to the heat exchangers 7, 7'. One of the important features of the invention resides in the fact that precise control of the concentration of the hygroscopic liquid has been made possibly by the invention with minimum energy consumption in the regeneration of the hygroscopic liquid, as described hereinafter. Control of the flow rate of the coolant may be effected by detecting the dew point of air leaving the dehydrating towers 5, 5' and controlling the flow rate of the coolant supplied to the heat exchangers 7, 7' in accordance with the detected dew point. An instrument for detecting the dew point of dehydrated air and a system for controlling fluid flow rate in accordance with the detected dew point of the dehydrated air are well known in the art. In addition to such known control at the side of the dehydration assembly, the invention contemplates control at the side of the regeneration assembly, which constitutes the crux of the invention.

The apparatus in accordance with the invention further comprises a regeneration assembly 10, which is divided into regeneration units A, B, C and D. Although the regeneration assembly 10 comprises, in the illustrated embodiment, one regenerating tower, which is divided into two units A and B, and another regenerating tower, which is divided into two units C and D, it may comprise one tower divided into four units. Because these units are conveniently of the same structure, corresponding parts of the respective units A, B, C and D are designated in the drawings by the same numeral accompanied by letters a, b, c and d, respectively. In the following description such letters will be omitted where no confusion occurs. In each unit there is provided regeneration means comprising means 11 for spraying spent hygroscopic liquid to be regenerated and a heat exchanger 12 (a steam heater) located below the spray 11. The regeneration assembly 10 has such a size that it can handle the maximum regeneration load expected during the year, so that it can operate well even when the difference in concentration between the hygroscopic liquid supplied to the dehydration assembly and the hygroscopic liquid leaving the dehydration assembly reaches its highest level in the year. In other words the regeneration assembly 10 must be constructed to such a size that it has the capacity to handle the maximum regeneration load if all of the units A, B, C and D are allowed to operate.

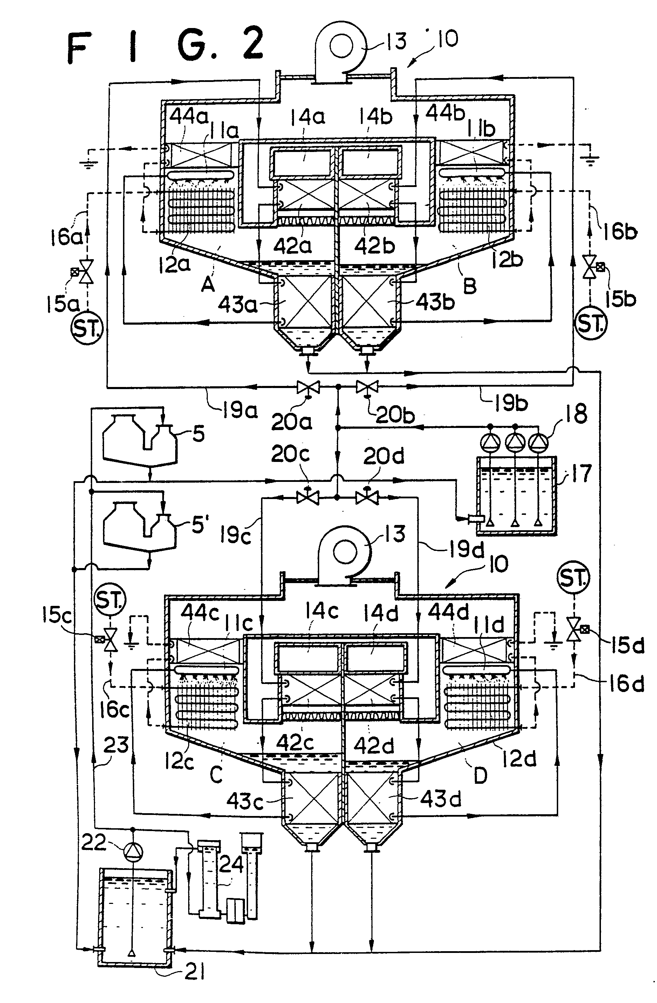

The regeneration assembly is more particularly illustrated in Fig. 2. By means of a blower 13, atmospheric air is introduced into each unit, caused to pass therethrough and withdrawn therefrom through an exhaust outlet 14. This air serves as a medium for carrying out of the system some of the moisture contained in the partially spent hygroscopic liquid being sprayed by the spray 11. The heat of evaporation required for evaporating such moisture in the partially spent hygroscopic liquid is provided by the heat exchanger 12 of a finned tube type, to which steam at a constant pressure and a constant temperature is supplied from a steam source ST through a valve 15 and a conduit 16.

The spray 11 of each unit is provided with piping for supplying thereto the hygroscopic liquid to be regenerated that is a part of the liquid which has passed through the dehydration assembly and, thus, has been somewhat diluted. In the illustrated embodiment, a part (for example about one third) of the hygroscopic liquid which has passed through the dehydrating tower 5 is passed to a tank 17, where it forms a pool of the liquid to be regenerated. The remaining part of the hygroscopic liquid from the tower 5 and all of the hygroscopic liquid from the tower 5' are passed to a tank 21, from which the liquid is circulated by means of a pump 22 through a pipe 23 to the respective spray means 6, 6' of the dehydration assembly. Alternatively, the hygroscopic liquid from the tower 5 and that from the tower 5' may be combined together, and a part of the combined liquid may be passed to the tank 17 for regeneration while the remaining part of the combined liquid is passed to the tank 21 for circulation. There are provided pumps 18 by which the liquid in the tank 17 to be regenerated is passed through respective valves 20 and branch pipes 19 to the respective sprays 11 of the regeneration units. The regenerated hygroscopic liquid leaving the regeneration units are returned to the tank 21 for re-use.

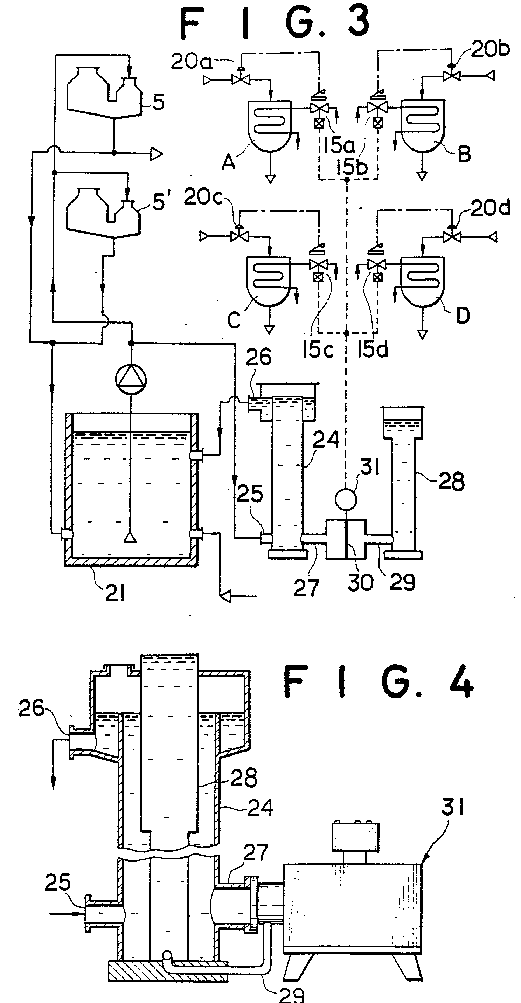

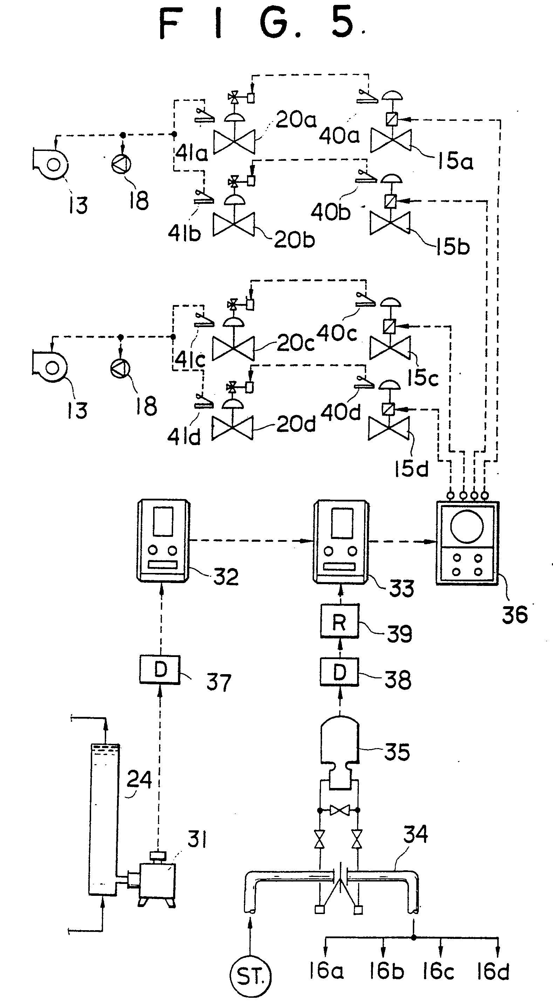

The apparatus is provided with a cylinder 24 through which at least a part of the circulating hygroscopic liquid is caused to flow so as to provide a liquid head of a predetermined height. Preferably, the cylinder 24 is located in the passage of the hygroscopic liquid from the tank 21 to the sprays 6, 6' of the dehydrating towers 5, 5'. As shown in Fig. 3, the cylinder 24 comprises a vertical cylinder having an open top and a liquid inlet 25 at the lower portion. The hygroscopic liquid is introduced through the liquid inlet 25 into the cylinder 24, forced flow upwardly therethrough, and allowed to overflow whereby a liquid head of a predetermined height is provided. The overflowing liquid is allowed to pass through a liquid outlet 26 and returns to the tank 21. At the lower portion of the cylinder 24 there is provided a tube 27 in communication with the liquid. The tube 27 is connected with another tube 29 via a liquid-impermeable membrane 30, the tube 29 being connected to the lower portion of a reference cylinder 28 filled with a predetermined height of a non-volatile reference liquid. When the pressure of the hygroscopic liquid in the tube 27 varies in accordance with its change in concentration (and hence density) resulting from the change in the regeneration load, the membrane 30 is displaced. The displacement of the membrane 30 is electrically detected by a differential pressure detector 31. Fig. 4 depicts a preferred form of the concentration detecting means, in which the reference cylinder 28 having an upper portion of a larger diameter is coaxially located in the cylinder 24, and made of a material having a good thermal conductivity. This preferred form is advantageous in that even if the temperature of the hygroscopic liquid flowing through the cylinder change to some extent, errors in the detected values of the concentration due to the change in the temperature of the liquid are minimized. When compared with a level detector or a level control device utilizing a float, which have heretofore been used in a wet process dehydration assembly of this kind, the concentration detecting means disclosed herein can directly read the concentration without being adversely effected by ripples on the liquid surface, and thus, makes it possible to precisely detect the change in the concentration with time.

The signal of the concentration detecting means, that is the value electrically detected by the differential pressure detector 31 is then transmitted, as schematically shown in Fig. 3, to the respective valves 15 for controlling the flow rate of the fluid heating medium (steam) introduced into the respective regeneration means in accordance with the transmitted signal, and further to the respective valves 20 for controlling the flow rate of the hygroscopic liquid introduced into the respective regeneration means in accordance with the transmitted signal. In a case where the regeneration load is relatively low so that one or more regeneration units may be allowed to stop operation, the value detected by the differential pressure detector 31 may also be utilized to stop supply of atmospheric air to such units and to cause one or more pump 18 to stop operating.

A system for controlling the operation of flow apparatus is now described with reference to the flow diagram shown in Fig. 5. In Fig. 5, the numeral 32 designates and instrument for indicating the deviation of the concentration of the hygroscopic liquid hereinafter referred to as concentration deviation indicator), the numeral 33 designates an instrument for instructing the flow rate of the steam (hereinafter referred to as steam flow rate instructor), the numeral 34 designates a steam main duch through which steam is passed from the steam source ST to the respective conduits 16 (Fig. 2) in the respective regeneration units, the numeral 35 designates a pair of differential pressure detectors for detecting the flow rate of steam flowing through the main duct 34, and the numeral 36 designates a proportioning instrument.

Let us assume a case wherein the maximum load expected throughout the year is 5,700 Kg of moisture per hour. The apparatus in full operation can remove 5,700 Kg of moisture per hour from atmospheric air. In other words the regeneration assembly of the apparatus is of such a size that it can remove 5,700 Kg of moisture per hour from the partly spent hygroscopic liquid. With respect to such apparatus we will describe how to control the operation at the time the regeneration load is reduced to 2,700 Kg of moisture per hour. At this time the load of the regeneration assembly is 47.4% of the maximum load. If the regeneration assembly is divided into equivalent units A, B, C and D, it is sufficient to allow two of the four units to operate for handling such load as 47.4% of the maximum.

At first a value of the concentration of the circulating hygroscopic liquid is selected depending upon the particular season and the selected value is preset in the concentration deviation indicator 32. It is advantageous to select and preset a high value in a season during which the dehydration load is high, and a low value in a season during which the dehydration load is low. In the discussed example, the concentration of the circulating hygroscopic liquid (aqueous solution of lithium chloride) is preset at 40% by weight (of lithium chloride).

During the operation based on this preset concentration, the differential pressure detector 31 detects the concentration of the operating liquid, and transmits the detected value through a distributor 37 to the concentration deviation indicator 32, which in turn transmits the deviation of the detected value from the preset value to the steam flow rate instructor 33 so as to change the value of the steam flow rate which has been preset in the instructor 33. The total flow rate of the steam being supplied to the regeneration assembly 10 is detected by the differential pressure detectors 35 (one being for a large amount of flow, while the other is for detecting a small amount of flow), and the output from the detectors 35 is transmitted via a distributor 38, a signal limiter and adder 39 to the steam flow rate instructor 33. The output signal from the steam flow rate instructor 33 is proportioned in the proportioning instrument 36 and controls the respective values 15 in a cascade manner in accordance with the signal from the concentration deviation indicator 32. The output signal from the steam flow rate instructor 33 can vary, for example, within the range between 1 and 5 volts. When the output varies within the range between 1 and 2 volts, the valve 15a is controlled so that it is opened to a degree proportional to the output while all other valves are kept closed. When the output varies within the range between 2 and 3 volts, the opening degree of the valve 15b is proportionally controlled while the valve 15a is fully opened and the valves c and d are kept closed. If the output is within the range from 3 to 4 volts, the valve 15c is partially opened while the valves 15a and b are fully opened and the valve d is kept closed. Further, when the output is within the range from 4 to 5 volts, the valve d is partially opened while all other valves are kept fully opened. By the term "cascade" we mean such a manner of control. In the stationary operation of the discussed example wherein the percent load is 47.4%, the valve 15a is fully opened while the valve 15b is partially opened to a degree corresponding to the particular output within the range between 2 and 3 volts and the valves c and d are kept closed. If the concentration of the circulating hygroscopic liquid in the cylinder 24 becomes diluted to a level below the preset concentration value, the valve 15b is forced to open to a greater degree so as to increase the regeneration power. If insufficient with the value 15b fully opened, the valve 15c is forced to open in response to the output signal.

The flow rate of the hygroscopic liquid supplied to the sprays 11 of the regeneration units is controlled by means of the valves 20 located in the respective branched pipes 19. In the illustrated embodiment each valve 15 for controlling the flow rate of steam is provided with electrical contacts 40 which may open or close in accordance with the degree of opening of the valve 15. When the valve 15 has opened to a certain degree, the contacts 40 actuate the corresponding valve 20 to open it fully. Unlike the valve 15, which may open to any degree of opening in response to the output signal, the valve 20 may be an electromagnetically actuatable on-off valve. The valve 20 is also provided with electrical contacts 41 which can effect on-off control of one or more pumps 18 and one of the blowers 13 in accordance with the switching of the valve 20.

When a volume as large as about 5,000 Nm³/min. of air is processed in the apparatus, it is required in general to circulate through the apparatus a quantity as large as about 20 tons of the hygroscopic liquid (40% LiCl aq. basis). Even in such large scale operation, the cascade control of the valves 15 in conjunction with the control of the respective valves 20, as disclosed herein, makes it possible to precisely control the concentration of the hygroscopic liquid supplied to the sprays 6, 6' of the dehydration assembly so that it is maintained within the narrow range between about 0.5% below the preset value and about 0.5% above the preset value. In addition, it is possible to avoid any wasteful consumption of regeneration energy, because only the necessary number of units share the regeneration work and any unnecessary operation is avoided throughout the year.

In order to reduce the consumption of both regeneration energy in the regeneration assembly and cooling energy in the dehydration assembly, each regeneration unit is provided with at least one heat exchanger for transferring sensible heat of at least one of the fluids (i.e. the regenerated hygroscopic liquid, steam drain and air) leaving the regeneration means of said unit to at least one of the fluids (i.e. the hygroscopic liquid to be regenerated and intake atmospheric air) introduced into said unit. In the embodiment shown in Fig. 2 each unit is provided with a gas-liquid heat exchanger 42 for transferring sensible heat of the hot wet air leaving the regeneration means of said unit to the partially spent hygroscopic liquid to be introduced into the regeneration means of said unit, a liquid-liquid heat exchanger 43 for transferring sensible heat of the regenerated hygroscopic liquid leaving the regeneration means of said unit to the partially spent hygroscopic liquid to be introduced into the regeneration means of said unit, and a gas-liquid heat exchanger 44 for transferring sensible heat of the steam drain leaving the regeneration means of said unit ot the intake atmospheric air to be introduced into the regeneration means of said unit.

The gas-liquid heat exchanger 42 is a finned tube heat exchanger, which is located immediate upstream of the exhaust outlet 14 in the direction of the flow of air. The liquid to be regenerated is passed through the tubes of the heat exchanger 42 while the hot wet air is passed through the space outside the tubes. The liquid to be regenerated which has passed the valve 20 enters the gas-liquid heat exchanger 42 and then the liquid-liquid heat exchanger 43, which is also a finned tube heat exchanger located in a sump of the regeneration unit. Thus, the liquid to be regenerated is, prior to being introduced into the regeneration means, to receive sensible heat from both the exhaust air and regenerated liquid leaving the regeneration means. The liquid-liquid heat exchanger 43 further serves to reduce the cooling load of the heat exchangers 7, 7' in the dehydration assembly. The gas-liquid heat exchanger 44 is also a finned tube heat exchanger located in the passage of air upstream of the spray 11. The steam drain which has left the heat exchanger 12 is passed through the tube of the heat exchanger 44 for heat exchange with the intake air so as to reduce the amount of heat required in the heat exchanger. Since such heat exchangers 42, 43 and 44 are provided in each regeneration unit, and are allowed to operate when the unit is operating independently of the operation of other unit or units, they do not adversely affect the control system, utilizing the concentration detecting means in accordance with the invention.

From the description as given above, it will be appreciated by a person skilled in the art that the apparatus in accordance with the invention can bring about advantageous results in blast furnace operation especially in those districts where the climates considerably vary with the seasons of the year. Various modifications to the disclosed embodiment are possible without departing from the scope of the invention, depending upon the climates of the particular area where the apparatus is installed and/or upon the particular size of the blast furnace. For example, the regeneration assembly may be divided into two, three or five units. Further, any other suitable systems may be utilized for controlling the concentration detecting means.

**Claims**

1. An apparatus for continuous dehydration of atmospheric air for supply via a blower to a blast furnace, comprising a dehydration assembly (5, 5') provided with at least one dehydration means (6) for contacting an intake stream of atmospheric air with regenerative hygroscopic liquid so as to reduce the moisture content of the air, an outlet duct for the dehydrated air coming from the dehydration assembly, a regeneration assembly (10) for used hygroscopic liquid, the regeneration assembly being provided with at least one regeneration means (11, 12) for contacting at least a part of the hygroscopic liquid which has been used in the dehydration assembly with another intake stream of atmospheric air heated by a fluid heating medium so as to regenerate said part of the hygroscopic liquid, piping means being provided for circulating through the or each said dehydration means the so regenerated hygroscopic liquid together with any remainder of the hygroscopic liquid which has been used in the dehydration assembly, means for continuously detecting the density

13 **0 006 099** 14

(and hence concentration) of the hygroscopic liquid flowing through said piping means, and means for controlling the flow rate of the fluid heating medium introduced into said regeneration means in accordance with a signal from said means for detecting the concentration of hygroscopic liquid; characterised in that

(a) a cylinder (24) is provided through which at least a part of the hygroscopic liquid flowing through said piping means is caused to flow so as to provide a liquid head of a predetermined height;

(b) said means for continuously detecting the concentration of the hygroscopic liquid flowing through said piping means comprises means (31) for detecting the liquid pressure provided by said predetermined height of liquid in said cylinder (24), said liquid pressure varying with the density and hence the concentration of said liquid in the cylinder;

(c) said regeneration assembly (10) is divided into a plurality of regeneration units (A, B, C, D), each regeneration unit being provided with its own regeneration means (11, 12), and means (20) for controlling the flow rate of the hygroscopic liquid introduced into said regeneration means directly or indirectly in accordance with a signal from said means (30, 31) for detecting the concentration of the hygroscopic liquid, whereby each regeneration unit is controllably operable independently of other units; and

(d) each regeneration unit is further provided with at least one heat exchanger (42, 43, 44) for transferring sensible heat of at least one fluid, of the regenerated hygroscopic liquid, fluid heating medium and air, leaving the regeneration means of said unit to at least one fluid, of the hygroscopic liquid to be regenerated and atmospheric intake air, introduced into said unit.

2. An apparatus in accordance with claim 1 wherein said means for detecting the concentration of the hygroscopic liquid comprises means (28, 29) for containing a reference liquid and contacting a predetermined height of the reference liquid with a lower portion (27) of said cylinder (24) via a liquid impermeable membrane (30) and means (31) detecting displacement of said membrane, whereby the concentration of the hygroscopic liquid is detected by detection of the liquid pressure at said lower portion of the cylinder as indicated by displacement of said membrane.

3. An apparatus in accordance with claim 1 or 2 wherein said means for controlling the flow rate of the fluid heating medium is a first valve (15) arranged for opening controllably in accordance with the signal from said means (31) for detecting the concentration of the hygroscopic liquid, and said means for controlling the flow rate of said hygroscopic liquid into said regeneration means is an electromagnetic valve (20) operated by the degree of opening of said first valve (15) so that the flow of hygroscopic liquid into the regeneration means (11) is started or stopped.

4. An apparatus in accordance with any one of the preceding claims wherein each of said regeneration units (A, B, C, D) is provided with a heat exchanger (42) for transmitting sensible heat of hot moist air, which has passed through said regeneration means, to the partially spent hygroscopic liquid to be introduced into said regeneration means, a heat exchanger (43) for transmitting sensible heat of the regenerated hygroscopic liquid, which has passed through said regeneration means, to the partially spent hygroscopic liquid to be introduced into said regeneration means, and a heat exchanger (44) for transmitting sensible heat of the heating medium, which has passed through said regeneration means, to the atmospheric intake air to be introduced into said regeneration means.

5. An apparatus in accordance with any one of the preceding claims wherein the hygroscopic liquid comprises an aqueous solution of lithium chloride, an instrument (32) for indicating the deviation of the concentration of lithium chloride in said solution is provided in which the desired concentration can be preset at a certain value within the range of 35 to 50% by weight of lithium chloride in accordance with the particular atmospheric conditions under which said appparatus is allowed to operate, and which compares said preset concentration value with the concentration value represented by the signal from said means (31) for detecting the concentration of the hygroscopic liquid, and controls the flow rate of fluid heating medium in accordance with the deviation detected.

6. An apparatus in accordance with any one of the preceding claims wherein said regeneration assembly (10) is divided into four regeneration units (A, B, C, D).

7. An apparatus in accordance with claim 1 or 2 wherein said means for controlling the flow rate of the fluid heating medium is an electromagnetic valve capable of opening controllably, and in accordance with the degree of opening of said valve the hygroscopic liquid to be supplied to the regeneration means is started to flow or caused to stop flowing into said regeneration means.

**Revendications**

1. Appareil de déshydratation continue d'air atmosphérique pour alimenter via un souffleur un haut-fourneau, comprenant un assemblage de déshydratation (5, 5') pourvu d'au moins un moyen de déshydratation (6) pour contacter un courant d'entrée d'air atmosphérique avec un liquide hygroscopique régénérable de manière à réduire la teneur en humidité de l'air, une conduite de sortie pour l'air déshydraté provenant de l'assemblage de déshydratation, un assemblage de régénération (10) pour le liquide hygroscopique utilisé, l'assemblage de régénération étant pourvu d'au moins un moyen de régénération (11, 12) pour contacter au moins une partie du liquide hygroscopique qui a été utilisé dans l'assemblage de déshydratation avec un autre courant d'entrée d'air atmosphérique chauffé par un milieu chauffant fluide de manière à régénérer ladite partie du liquide hygroscopique, un moyen formant tuyauterie étant prévu pour circuler à travers le ou chacun desdits moyens de déshydratation de liquide hygroscopique ainsi régénéré avec toute partie restante du liquide hygroscopique qui a été utilisé dans l'assemblage de déshydratation, un moyen pour détecter continuellement la densité (et de là la concentration) du liquide hygroscopique s'écoulant au travers dudit moyen formant tuyauterie, et un moyen pour contrôler le débit d'écoulement du milieu chauffant fluide introduit dans ledit moyen de régénération selon un signal émis à partir dudit moyen de détection de la densité (concentration) du liquide hygroscopique; caractérisé en ce que:

(a) un cylindre (24) est prévu au travers duquel au moins une partie du liquide hygroscopique s'écoulant au travers dudit moyen formant tuyauterie est amené à s'écouler de manière à fournir une tête de liquide d'une hauteur prédéterminée;

(b) ledit moyen de détection en continu de la concentration du liquide hygroscopique s'écoulant au travers dudit moyen formant tuyauterie comprend un moyen (31) pour détecter la pression de liquide fournie par ladite hauteur prédéterminée de liquide dans ledit cylindre (24), ladite pression de liquide variant avec la densité et de là la concentration dudit liquide dans le cylindre;

(c) ledit assemblage de régénération (10) est divisé en une pluralité d'unités de régénération (A, B, C, D), chaque unité de régénération étant pourvue de son propre moyen de régénération (11, 12), et un moyen (20) pour contrôler le débit d'écoulement du liquide hygroscopique introduit dans ledit moyen de régénération directement ou indirectement selon un signal provenant dudit moyen (30, 31) pour détecter la concentration du liquide hygroscopique, par lequel chaque unité de régénération est opérable de manière contrôlable indépendamment des autres unités; et

(d) chaque unité de régénération est en outre pourvue d'au moins un échangeur de chaleur (42, 43, 44) pour transférer la chaleur sensible d'au moins un fluide, du liquide hygroscopique régénéré, du milieu chauffant fluide et de l'air, en laissant le moyen de régénération de ladite unité à au moins un fluide, du liquide hygroscopique à régénérer et de l'air d'entrée atmosphérique, introduit dans ladite unité.

2. Appareil selon la revendication 1, caractérisé en ce que le moyen précité de détection de la concentration du liquide hygroscopique comprend un moyen (28, 29) contenant un liquide de référence et contactant une hauteur prédéterminée du liquide de référence avec une partie inférieure (27) du cylindre précité (24) via une membrane (30) imperméable au liquide et un moyen (31) de détection du déplacement de ladite membrane, de sorte que la concentration du liquide hygroscopique est détectée par détection de la pression du liquide à ladite partie inférieure du cylindre comme indiqué par le déplacement de ladite membrane.

3. Appareil selon la revendication 1 ou 2, caractérisé en ce que le moyen précité pour contrôler le débit d'écoulement du milieu chauffant fluide est une première vanne (15) arrangée pour s'ouvrir de manière contrôlable selon le signal émis à partir du moyen (31) précité pour détecter la concentration du liquide hygroscopique, et ledit moyen pour contrôler le débit d'écoulement du liquidehygroscopique dans le moyen de régénération est une vanne (20) électromagnétique opérée par le degré d'ouverture de ladite première vanne (15) de sorte que l'écoulement du liquide hygroscopique dans le moyen de régénération (11) est commencé ou arrêté.

4. Appareil selon l'une quelconque des revendications précédentes, caractérisé en ce que chacune des unités de régénération (A, B, C, D) est pourvue d'un échangeur de chaleur (42) pour transmettre la chaleur sensible de l'air humide chaud, qui a passé au travers dudit moyen de régénération, au liquide hygroscopique partiellement dépensé à introduire dans ledit moyen de régénération, un échangeur de chaleur (43) pour transmettre la chaleur sensible du liquide hygroscopique régénéré, qui a passé au travers du moyen de régénération, au liquide hygroscopique partiellement dépensé à introduire dans le moyen de régénération, et un échangeur (44) de chaleur pour transmettre la chaleur sensible du milieu chauffant, qui a passé au travers du moyen de régénération, à l'air d'entrée atmosphérique à introduire dans ledit moyen de régénération.

5. Appareil selon l'une quelconque des revendications précédentes, caractérisé en ce que le liquide hygroscopique comprend une solution aqueuse de chlorure de lithium, un instrument (32) pour indiquer la déviation de la concentration du chlorure de lithium dans ladite solution est prévu dans lequel la concentration désirée peut être préréglée à une certaine valeur dans le domaine allant de 35 à 50% en poids de chlorure de lithium selon les conditions atmosphériques particulières dans lesquelles ledit appareil est laissé opérer, et qui compare ladite valeur de concentration préréglée avec la valeur de concentration représentée par le signal à partir dudit moyen (31) pour détecter la concentration du liquide hygroscopique, et contrôle le débit d'écoulement du milieu chauffant fluide selon la déviation détectée.

6. Appareil selon l'une quelconque des revendications précédentes, caractérisé en ce que l'assemblage de régénération (10) est divisé en quatre unités de régénération (A, B, C, D).

7. Appareil selon la revendication 1 ou 2, caractérisé en ce que le moyen précité pour contrôler le débit d'écoulement du milieu chauffant fluide est une vanne électromagnétique capable de s'ouvrir de manière contrôlable, et selon le degré d'ouverture de ladite vanne le liquide hygroscopique à être alimenté au moyen de régénération a commence de s'écouler ou a été amené à arrêter l'écoulement dans le moyen de régénération.

## Patentansprüche

1. Vorrichtung zur kontinuierlichen Dehydrierung von atmosphärischer Luft für eine Zuführung zu einem Gebläseofen über ein Gebläse, mit einer Dehydrierungsanordnung (5, 5'), die mit mindestens einer Dehydrierungseinrichtung (6) zur Kontaktierung eines angesaugten Stromes von atmosphärischer Luft mit einer regenerierenden hygroskopischen Flüssigkeit versehen ist, um den Feuchtigkeitsgehalt der Luft herabzusetzen, einem Austrittskanal für die von der Dehydrierungsanordnung herrührende dehydrierte Luft, einer Regenerationsanordnung (10) für verbrauchte hygroskopische Flüssigkeit, wobei die Regenerationsanordnung mit wenigstens einer Regenerationseinrichtung (11, 12) zur Kontaktierung wenigstens eines Teiles der in der Dehydrierungsanordnung verbrauchten hygroskopischen Flüssigkeit mit einem von einem fluiden Heizmedium aufgeheizten weiteren angesaugten Strom atmosphärischer Luft versehen ist, um diesen Teil der hygroskopischen Flüssigkeit zu regenerieren, einer Rohrleitungseinrichtung, um durch die oder jede der Dehydrierungseinrichtungen die so regenerierte hygroskopische Flüssigkeit zusammen mit jeglichem Rest der in der Dehydrierungsanordnung verbrauchten hygroskopischen Flüssigkeit in Umlauf zu bringen, einer Einrichtung zur kontinuierlichen Erfassung der Dichte (und daher der Konzentration) der durch die Rohrleitungseinrichtung fließenden hygroskopischen Flüssigkeit, und einer Einrichtung zur Steuerung der Durchflußgeschwindigkeit des in die Regenerationseinrichtung eingeführten fluiden Heizmediums in Übereinstimmung mit einem von der Einrichtung zur Erfassung der Konzentration der hygroskopischen Flüssigkeit gelieferten Signal, dadurch gekennzeichnet, daß

(a) ein Zylinder (24) vorgesehen ist, durch den wenigstens ein Teil der durch die Rohrleitungseinrichtung strömenden hygroskopischen Flüssigkeit hindurchgeleitet wird, um eine Flüssigkeitssäule von einer vorbestimmten Höhe zu bilden,

(b) die Einrichtung zur kontinuierlichen Erfassung der Konzentration der durch die Rohrleitungseinrichtung fließenden hydroskopischen Flüssigkeit eine Einrichtung (31) zur Erfassung des durch die vorbestimmte Höhe der Flüssigkeit in dem Zylinder (24) hervor

gerufenen Flüssigkeitsdruckes aufweist, wobei der Flüssigkeitsdruck in Abhängigkeit von der Dichte und daher der Konzentration der Flüssigkeit in dem Zylinder veränderlich ist,

(c) die Regenerationsanordnung (10) in eine Anzahl von Regenerationseinheiten (A, B, C, D) unterteilt ist, deren jede mit ihrer eigenen Regenerationseinrichtung (11, 12) versehen ist sowie mit einer Einrichtung (20) zur unmittelbar oder mittelbar in Übereinstimmung mit einem von Einrichtung (39, 31) zur Erfassung der Konzentration der hygroskopischen Flüssigkeit gelieferten Signal erfolgenden Steuerung der Durchflußgeschwindigkeit der in die Regenerationseinrichtung eingeführten hygroskopischen Flüssigkeit, wobei jede Regenerationseinheit in steuerbarer Weise unabhängig von anderen Einheiten betreibbar ist, und

(d) jede Regenerationseinheit ferner mit wenigstens einem Wärmetauscher (42, 43, 44) zur Übertragung von Eigenwärme von wenigstens einem Fluid aus der regenerierten hygroskopischen Flüssigkeit, dem fluiden Heizmedium und der Luft, die die Regenerationseinrichtung zu der Einheit hin verlassen, auf wenigstens ein Fluid aus der zu regenerierenden hygroskopischen Flüssigkeit und der atmosphärischen Ansaugluft, die in die Einheit eingeführt werden, versehen ist.

2. Vorrichtung nach Anspruch 1, bei der die Einrichtung zur Erfassung der Konzentration der hygroskopischen Flüssigkeit eine Einrichtung (28, 29) zur Aufnahme einer Bezugsflüssigkeit und zur Kontaktierung einer vorbestimmten Höhe der Bezugsflüssigkeit mit einem unteren Bereich (27) des Zylinders (24) über eine flüssigkeitsundurchdringliche Membran (30) aufweist sowie eine eine Verschiebung der Membran erfassende Einrichtung (31), wobei die Konzentration der hygroskopischen Flüssigkeit durch eine Erfassung des Flüssigkeitsdrucks in dem unteren Bereich des Zylinders, wie durch die Verschiebung der Membran angezeigt wird, erfaßt wird.

3. Vorrichtung nach Anspruch 1 oder 2, bei der die Einrichtung zur Steuerung der Durchflußgeschwindigkeit des fluiden Heizmediums durch ein erstes Ventil (15) gebildet ist, das zur gesteuerten Öffnung in Übereinstimmung mit dem durch die Einrichtung (31) zur Erfassung der Konzentration der hygroskopischen Flüssigkeit gelieferten Signal angeordnet ist und die Einrichtung zur Steuerung der Flußgesschwindigkeit der hygroskopischen Flüssigkeit in die Regenerationseinrichtung durch ein elektromagnetisches Ventil (20) gebildet ist, das durch den Grad der Öffnung des ersten Ventils (15) derart betätigt ist, daß der Strom der hygroskopischen Flüssigkeit in die Regenerationseinrichtung (11) hineingestartet oder angehalten wird.

4. Vorrichtung nach einem der vorhergehenden Ansprüche, bei der jede der Regenerationseinheiten (A, B, C, D) mit einem Wärmetauscher (42) zur Übertragung der Eigenwärme von heißer feuchter Luft, die durch die Regenerationseinrichtung hindurchgegangen ist, auf die Regenerationseinrichtung einzuführende teilweise verbrauchte hygroskopische Flüssigkeit versehen ist, sowie mit einem Wärmetauscher (43) zur Übertragung von Eigenwärme der regenerierten hygroskopischen Flüssigkeit, die durch die Regenerationseinrichtung hindurchgegangen ist, auf die in die Regenerationseintrichtung einzuführende teilweise verbrauchte hygroskopische Flüssigkeit und einem Wärmetauscher (44) zur Übertragung von Eigenwärme des Heizmediums, das durch die Regenerationseinrichtung hindurchgegangen ist, auf die in die Regenerationseinrichtung einzuführende atmosphärische Ansaugluft.

5. Vorrichtung nach einem der vorhergehenden Ansprüche, bei der die hygroskopische Flüssigkeit eine wässerige Lösung von Lithiumchlorid aufweist, und ein Instrument (32) zur Anzeige der Abweichung der Konzentration des Lithiumchlorids in der Lösung vorgesehen ist, in dem die gewünschte Konzentration auf einen bestimmten Wert innerhalb des Bereichs von 35 bis 50 Gew.-% von Lithiumchlorid in Übereinstimmung mit den besonderen atmosphärischen Bedingungen, unter denen die Vorrichtung betrieben wird, voreingestellt werden kann und das den voreingestellten Konzentrationswert mit dem durch das von der Einrichtung (31) zur Erfassung der Konzentration der hygroskopischen Flüssigkeit gelieferte Signal dargestellten Konzentrationswert vergleicht und die Flußgeschwindigkeit des fluiden Heizmediums in Übereinstimmung mit der erfaßten Abweichung steuert.

6. Vorrichtung nach einem der vorhergehenden Ansprüche, bei der die Regerationsanordnung (10) in vier Regenerationseinheiten (A, B, C, D) unterteilt ist.

7. Vorrichtung nach Anspruch 1 oder 2, bei der die Einrichtung zur Steuerung der Flußgeschwindigkeit des fluiden Heizmediums durch ein zur gesteuerten Öffnung befähigtes elektromagnetes Ventil gebildet ist, und die der Regenerationseinrichtung zuzuführende hygroskopische Flüssigkeit in Übereinstimmung mit dem Grad der Öffnung des Ventils in ihrem Fluß in die Regenerationseinrichtung hineingestartet oder angehalten wird.

# F I G. 1

F I G. 2

# F I G. 3

# F I G. 4

# F I G. 5.